# EUROPÄISCHE PATENTSCHRIFT

(11) **EP 2 161 145 B1**
(45) Veröffentlichungstag und Bekanntmachung des Hinweises auf die Patenterteilung: **02.04.2014**
(21) Anmeldenummer: 09168976.0
(22) Anmeldetag: 28.08.2009
(51) Int. Cl.: B60D 1/30, B60D 1/62, B60T 7/20, B60T 13/74, B60T 13/08, B60T 8/17, B60D 1/24

(54) **Stromversorgungseinrichtung für ein auflaufgebremstes Anhängerfahrzeug**
Power supply device for an inertia-braked trailer vehicle
Dispositif d'alimentation électrique pour une remorque dotée de freins à inertie

(30) Priorität: 29.08.2008 DE 102008044941
(43) Veröffentlichungstag der Anmeldung: 10.03.2010
(73) Patentinhaber: BPW FAHRZEUGTECHNIK GmbH & CO. KG, 33104 Paderborn (DE)
(72) Erfinder: Schneider, Peter, 51597 Morsbach (DE); Manz, Stefan, 51588 Nümbrecht (DE)
(74) Vertreter: Christophersen & Partner

(56) Entgegenhaltungen:
- DE-A1-102007 036 909
- DE-U1- 29 607 092
- DE-U1- 29 800 542

## Beschreibung

Die Erfindung betrifft eine Stromversorgungseinrichtung für ein auflaufgebremstes Anhängerfahrzeug, welches mit einem elektrischen Zusatzbremssystem, z. B. einem Schlingerstoppsystem, sowie weiteren elektrischen Verbrauchern versehen ist, mit einem ausgehend von einem mehrpoligen Stecker bis zu einem elektrischen Verteiler im Anhängerfahrzeug führenden Versorgungskabel, wobei der mehrpolige Stecker korrespondierend zu einer am Zugfahrzeug befestigten, mehrpoligen Buchse ausgestaltet ist.

Aus Gründen der Fahrsicherheit werden auflaufgebremste Anhängerfahrzeuge, d.h. Anhängerfahrzeuge, deren Bremsen mechanisch in Abhängigkeit von der Verzögerung des Zugfahrzeugs betätigt werden, mit Zusatzbremssystemen ausgestattet. Diese werden entweder eingesetzt, um in Ergänzung zu der mechanischen Auflaufbremsung die Bremsleistung am Anhänger zu erhöhen, oder um unabhängig von den Fahrzuständen des Zugfahrzeuges, etwa zum Ausgleich von Schlingerbewegungen des Anhängerfahrzeuges, gezielt nur das Anhängerfahrzeug ein- oder beidseitig abzubremsen.

Zusatzbremssysteme zur Vermeidung bzw. Unterdrückung eines Schlingerns des Anhängerfahrzeuges sind aus der DE 296 07 092 U1, oder DE 29800542 U1 und der Anmeldung DE 10 2007 036 909 A1 bekannt. Bei derartigen Schlingerstoppsystemen ist ein mit elektrischem Antrieb arbeitendes Bremsaggregat im vorderen Teil des Anhängers nahe dessen Zugdeichsel installiert. Ein auf die Fahrzeugbremse wirkendes Zugelement, welches bei Betätigung des Zusatzbremssystems im Kraftfluss liegt, ist durch ein Betätigungselement von einer Ausgangsstellung in eine Betätigungsstellung bewegbar, und beaufschlagt hierbei über einen Kopplungspunkt die Anhängerbremse. Als Betätigungselement kommt ein Elektromotor zum Einsatz, dessen Betrieb eine ausreichende Versorgungsspannung erfordert. Da Anhängerfahrzeuge häufig über keine eigene Batterie verfügen, erfolgt die Spannungsversorgung über die Batterie bzw. das Bordnetz des Zugfahrzeuges.

Vor allem bei Wohnanhängern erfolgt die Spannungsversorgung über ein anhängerseitiges flexibles Anschlusskabel, dessen mehrpoliger Stecker korrespondierend zu einer am Zugfahrzeug befestigten, mehrpoligen Buchse ausgestaltet ist. Stecker und Buchse sind für Wohnanhänger und andere leichte Anhängerfahrzeuge in der Europäischen Union genormt. Neben der genannten Spannungsversorgung der internen elektrischen Verbraucher des Anhängers übernehmen sie, elektrisch getrennt, noch verschiedene weitere Funktionen, etwa die Signalübertragung der Bremslichtsignale oder Warnblinksignale. Zur Versorgung der internen elektrischen Verbraucher des Anhängers führt das Anschlusskabel zu einem zumeist zentral innerhalb des Fahrzeuganhängers angeordneten Verteiler, z. B. einem Klemmenkasten oder einer Verteilerdose. An diesen Verteiler ist auch das Zusatzbremssystem mittels entsprechender elektrischer Versorgungsleitungen angeschlossen. Um allerdings eine Überlastung der bordeigenen Sicherungen des Anhängerfahrzeuges durch Einsatz des Zusatzbremssystems zu vermeiden, wird mittels geeigneter Schalter oder Relais sichergestellt, dass dem Zusatzbremssystem im Bedarfsfall eine ausschließliche Spannungsversorgung zur Verfügung steht, wohingegen die anderen internen Verbraucher des Anhängers für diesen Zeitraum von der Spannungsversorgung getrennt sind.

Diese Prioritätsschaltung des Zusatzbremssystems führt zu relativ langen Kabellängen, wodurch es zu einem Übersteigen der durch technische Normen festgelegten, maximal zulässigen Kabellängen in Anhängerfahrzeugen kommen kann.

Der Erfindung liegt daher die **Aufgabe** zugrunde, unter Beachtung der Bestimmungen zur Länge von Kabelverbindungen den Montageaufwand für die Stromversorgung des Zusatzbremssystems zu verringern.

Zur **Lösung** dieser Aufgabe ist eine Stromversorgungseinrichtung für ein auflaufgebremstes Anhängerfahrzeug gemäß Oberbegriff gekennzeichnet durch einen den anhängerseitigen Stecker mit der zugfahrzeugseitigen Buchse elektrisch verbindenden Leitungsstrang, dessen Dauerpluspfad im Bypass über den Pluskontakt des elektrischen Zusatzbremssystems geführt ist.

Gemäß einer Ausgestaltung der erfindungsgemäßen Stromversorgungseinrichtung ist der Leitungsstrang zumindest zum Zugfahrzeug hin als biegsamer Kabelstrang ausgebildet, der in einem in die zugfahrzeugseitige Buchse einsteckbaren, zweiten Stecker endet. Mit einer weiteren Ausgestaltung wird vorgeschlagen, dass der Leitungsstrang zum Anhänger hin in einem Steckverbindergehäuse endet, in das der anhängerseitige Stecker einsteckbar ist. Vorzugsweise befinden sich Anfang und Ende des Bypasses innerhalb dieses Steckverbindergehäuses.

Mit einer weiteren Ausgestaltung wird vorgeschlagen, dass das Steckverbindergehäuse baulich in ein Gerätegehäuse des elektrischen Zusatzbremssystems integriert ist. Mit einer weiteren Ausgestaltung der Erfindung wird vorgeschlagen, dass parallel zum Dauerpluspfad der Massepfad des Leitungsstrangs abgegriffen wird.

Mit einer weiteren Ausgestaltung wird vorgeschlagen, dass die zwischen der zugfahrzeugseitigen Buchse und dem Pluskontakt des elektrischen Zusatzbremssystems gemessene Gesamtlänge des Dauerpluspfades nicht mehr als 1,5 m beträgt, so dass die elektrischen Leitungswiderstände keine zu hohen Werte annehmen.

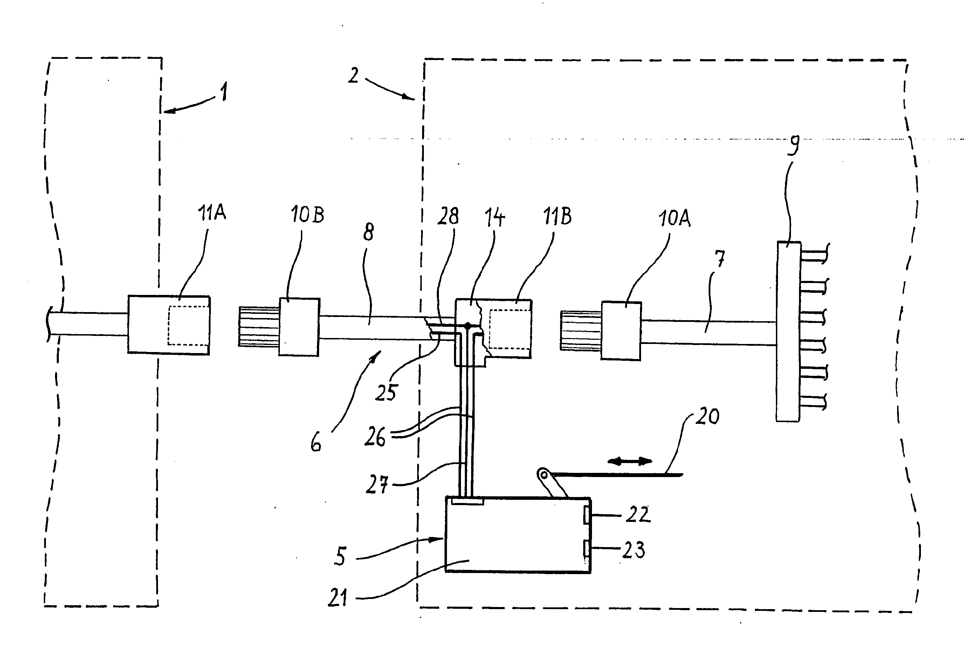

Weitere Vorteile und Einzelheiten werden im Folgenden anhand eines auf der Zeichnung dargestellten Ausführungsbeispiels beschrieben. Die Zeichnung stellt schematisch den Aufbau der Stromversorgungseinrichtung für ein Anhängerfahrzeug dar, einschließlich der elektrischen Schnittstelle zum Zugfahrzeug.

Mit 1 ist das Zugfahrzeug, z. B. ein Pkw, und mit 2 das Anhängerfahrzeug, z. B. ein Wohnanhänger, bezeichnet. Der Anhänger 2 ist in üblicher Weise über eine Deichsel mit dem Zugfahrzeug 1 verbunden, wobei die Deichsel auf der Zeichnung nicht dargestellt ist. Zur Erhöhung der Fahrsicherheit in labilen Fahrsituationen ist der Anhänger 2 mit einem elektromechanischen Zusatzbremssystem 5, einem sogenannten Schlingerstoppsystem, versehen. Ein derartiges System, welches die anhängerseitig vorgesehene Auflaufbremse ergänzt und hierbei in die Funktion der Auflaufbremse eingreift, ist z. B. in der Patentanmeldung DE 10 2007 036 909 beschrieben. Das Schlingerstoppsystem arbeitet elektromechanisch, verfügt also zur Erzielung oder Verstärkung der Bremskraft über einen in einem Gerätegehäuse 21 angeordneten Elektromotor zum Antrieb auf ein Bremsgestänge 20. Ferner angeordnet am Gerätegehäuse 21 sind Anschlüsse 22 für einen Beschleunigungssensor sowie Anschlüsse 23 für Kontrollleuchten. Für den Elektromotor, jedoch auch für die integrierte elektronische Steuerung des Schlingerstoppsystems, ist eine ausreichende elektrische Spannungsversorgung erforderlich. Da das Anhängerfahrzeug 2 über keine eigene Batterie verfügt, erfolgt die Strom- und Spannungsversorgung durch das elektrische Bordnetz des Zugfahrzeuges 1.

Zur Versorgung der verschiedenen elektrischen Verbraucher des Anhängerfahrzeuges 2 einschließlich des Zusatzbremssystems 5 ist das Zugfahrzeug 1 mit einer mehrpoligen elektrischen Buchse 11A versehen, z.B. einer 13-poligen Buchse nach dem in Europa weit verbreiteten Standard ISO 11446. Üblicherweise ist diese nahe des Kupplungszapfens für die Anhängerzugdeichsel befestigt. Zur Verstellung der elektrischen Verbindung mit dem Anhängerfahrzeug 2 dient dann ein entsprechender 13-poliger Stecker nach ebenfalls Standard ISO 11446, von dem aus die Anschlussverkabelungzu einem elektrischen Verteiler 9 führt. Üblicherweise sind derartige elektrische Verteiler 9 zentral im Anhängerfahrzeug 2 angeordnet, um von dort die kürzesten elektrischen Wege zu den einzelnen internen Verbrauchern des Anhängerfahrzeuges zu haben, etwa der Innenbeleuchtung, einem Kühlschrank oder Herd, einem TV-Anschluss oder dergleichen. In Großbritannien sind bei Wohnwagenanschlüssen auch 7-polige Stecker nach ISO 1724 und ISO 3732 in Gebrauch, wobei sich der Dauerpluspfad in dem ISO 3732 Anschluss befindet. In diesen Fällen haben die Fahrzeuganhänger zweimal sieben Pole oder einmal dreizehn Pole, daher wird ein Adapter von dreizehn Polen auf zweimal sieben Pole verwendet.

Im Rahmen der Erfindung wird der am Anhänger 2 ohnehin vorhandene Stecker 10A des Versorgungskabels 7 nicht unmittelbar an die Steckbuchse 11A des Zugfahrzeuges 1 angeschlossen, sondern mittelbar unter Zwischenschaltung eines Adapters 6, der einen zusätzlichen Leitungsstrang 8 bildet. Der Stecker 10B am zugfahrzeugseitigen Ende des Leitungsstrangs 8 ist identisch zu dem Stecker 10A gestaltet und weist dieselbe Polung auf. Am rückwärtigen Ende des Leitungsstranges 8 befindet sich eine elektrische Buchse 11B, die mit dem Stecker 10A verbindbar ist. Der Aufbau und die Polung der Buchse 11B sind wiederum identisch zu der am Zugfahrzeug 1 befestigten Buchse 11A.

Zum Anschluss an das elektrische Bordnetz des Zugfahrzeuges 1 ist der die Funktion des Anschlusskabels übernehmende Leitungsstrang auf seiner überwiegenden Länge biegsam, so dass er, sobald der Stecker 10B in die zugfahrzeugseitige Buchse 11A eingesteckt und daran verriegelt ist, die im Fahrbetrieb auftretenden Relativbewegungen zwischen Zugfahrzeug und Anhänger auszugleichen vermag. Zu diesem Zweck weist der Leitungsstrang 8 eine ausreichende Überlänge auf, so dass er bei gerade ausgerichtetem Fahrzeuggespann leicht durchhängt, ohne dass es bei starker Kurvenfahrt zu einem Abreißen des Anschlusskabels kommt.

Für einen sicheren Betrieb des Zusatzbremssystems 5 im Fahrbetrieb arbeitet das Zusatzbremssystem 5 mit Priorität gegenüber den übrigen, an dem elektrischen Verteiler 9 angeschlossenen elektrischen Verbrauchern des Anhängers 2. Zu diesem Zweck ist der Dauerpluspfad 25 des zusätzlichen Leitungsstrangs 8 im Bypass 26 über den Pluskontakt des elektrischen Zusatzbremssystems 5 geführt. Auf dem Weg vom elektrischen Bordnetz des Zugfahrzeuges zu dem elektrischen Verteiler 9 des Anhängers nimmt der Dauerpluspfad 25 daher nicht den direkten Weg, sondern den Umweg über den elektrischen Anschluss des Zusatzbremssystems. Dies führt aber zu einem deutlich verkürzten Strompfad bis zum Zusatzbremssystem, so dass elektrische Leistungsverluste aufgrund ohmscher Leitungswiderstände reduziert werden. Am Zusatzbremssystem 5 kommt nahezu die volle Versorgungsspannung an, wie sie vom elektrischen Bordnetz des Zugfahrzeuges 1 zur Verfügung gestellt wird. Durch die reduzierten und durch den Leitungsstrang 8 immer gleich langen Versorgungswege für die Versorgung des Zusatzbremssystems entfallen Leistungsstreuungen, die auf variierende ohmsche Leitungsverluste zurückzuführen sind.

Durch die Verbindbarkeit wie Trennbarkeit einerseits von Stecker 10A und Buchse 11B und andererseits von Stecker 10B und Buchse 11A ist nicht nur die Montage, sondern auch die Demontage des Schlingerstoppsystems 5 auf sehr einfache Art und Weise möglich. So kann im Fall eines Gerätedefekts die Einheit 5 mit wenigen Handgriffen außer Betrieb gesetzt und die Versorgung der am elektrischen Verteiler 9 angeschlossenen internen Verbraucher wieder hergestellt werden. Dies kann sogar ausdrücklich gewollt sein, z. B. bei längerer Fahrt auf einen Campingplatz auf schlechtem Untergrund und mit niedriger Geschwindigkeit, um etwaige Fehlauslösungen des Schlingerstoppsystems 5 gezielt zu unterdrücken.

Ferner ist es möglich, im Bereich der Buchse 11B des Adapters 6 einen Schalter anzuordnen, mit dem sich das Schlingerstoppsystem 5 außer Kraft setzen lässt. Der Schalter wirkt vorzugsweise auf einen Massepfad 27. Der Massepfad 27 verbindet in Gestalt einer Abzweigung den durchgehenden Massepfad 28 des Leitungsstrangs 8 mit den entsprechenden elektrischen Anschlüssen des Zusatzbremssystems 5.

Bei dem dargestellten Ausführungsbeispiel endet der zusätzliche Leitungsstrang 8 in einem Steckverbindergehäuse 14 des Adapters 6, an welchem sich die Buchse 11B für den anhängerseitig vorhandenen Stecker 10A befindet. In konstruktiv einfacher Weise befinden sich Anfang und Ende des Bypasses 26 in diesem Steckverbindergehäuses 14, ebenso der Abzweig für den Massepfad 27.

Alternativ ist es auch möglich, das Steckverbindergehäuse 14 baulich in das Gerätegehäuse 21 des Zusatzbremssystems 5 zu integrieren, zumal in der Praxis das Zusatzbremssystem 5 ohnehin im Bereich der Anhängerdeichsel angeordnet ist und damit in jenem Bereich des Anhängers, in welchem sich der Adapter 6 befindet.

Im Praxiseinsatz kann die Verbindung des anhängerseitigen Steckers 10A mit der Buchse 11B des Leitungsstrangs 8 dauerhaft sein. Stecker 10A und/oder Buchse 11B können daher im Bereich der Anhängerdeichsel gelegt sein, z. B. durch Verschrauben oder Festklemmen. Denn beim Trennen des Fahrzeuggespanns verbleibt der Leitungsstrang 8 einschließlich der an dessen Enden befestigten Kontaktierungselemente Buchse 11B und Stecker 10B am Anhängerfahrzeug 2. Getrennt wird daher nur der Stecker 10B des Adapters von der zugfahrzeugseitig fest installierten Buchse 11A.

### Bezugszeichenliste

- 1: Zugfahrzeug
- 2: Anhängerfahrzeug
- 5: Zusatzbremssystem, Schlingerstoppsystem
- 6: Adapter
- 7: Versorgungskabel
- 8: Leitungsstrang
- 9: elektrischer Verteiler
- 10A: Stecker
- 10B: Stecker
- 11A: Buchse
- 11B: Buchse
- 14: Steckverbindergehäuse
- 20: Bremsgestänge
- 21: Gerätegehäuse
- 22: Anschluss
- 23: Anschluss
- 25: Dauerpluspfad
- 26: Bypass
- 27: Massepfad
- 28: Massepfad

## Patentansprüche

1. Stromversorgungseinrichtung für ein auflaufgebremstes Anhängerfahrzeug, welches mit einem elektrischen Zusatzbremssystem (5), z. B. einem Schlingerstoppsystem, sowie weiteren elektrischen Verbrauchern versehen ist, mit einem ausgehend von einem mehrpoligen Stecker (10A) bis zu einem elektrischen Verteiler (9) im Anhängerfahrzeug führenden Versorgungskabel (7), wobei der mehrpolige Stecker (10A) korrespondierend zu einer am Zugfahrzeug befestigten, mehrpoligen Buchse (11A) ausgestaltet ist,
**gekennzeichnet durch**
einen den anhängerseitigen Stecker (10A) mit der zugfahrzeugseitigen Buchse (11A) elektrisch verbindenden Leitungsstrang (8), dessen Dauerpluspfad (25) im Bypass (26) über den Pluskontakt des elektrischen Zusatzbremssystems (5) geführt ist.

2. Stromversorgungseinrichtung nach Anspruch 1, **dadurch gekennzeichnet, dass** der Leitungsstrang (8) zumindest zum Zugfahrzeug hin als biegsamer Kabelstrang ausgebildet ist, der in einem in die zugfahrzeugseitige Buchse (11A) einsteckbaren, zweiten Stecker (10B) endet.

3. Stromversorgungseinrichtung nach Anspruch 1 oder 2, **dadurch gekennzeichnet, dass** der Leitungsstrang (8) zum Anhänger hin in einem Steckverbindergehäuse (14) endet, in das der anhängerseitige Stecker (10A) einsteckbar ist.

4. Stromversorgungseinrichtung nach Anspruch 3, **dadurch gekennzeichnet, dass** sich Anfang und Ende des Bypasses (26) innerhalb des Steckverbindergehäuses (14) befinden.

5. Stromversorgungseinrichtung nach Anspruch 3 oder 4, **dadurch gekennzeichnet, dass** das Steckverbindergehäuse (14) baulich in ein Gerätegehäuse (21) des elektrischen Zusatzbremssystems (5) integriert ist.

6. Stromversorgungseinrichtung nach einem der vorangehenden Ansprüche, **dadurch gekennzeichnet, dass** parallel zum Dauerpluspfad (25) der Massepfad (28) des Leitungsstrangs (8) angegriffen wird.

7. Stromversorgungseinrichtung nach einem der vorangehenden Ansprüche, **dadurch gekennzeichnet, dass** die zwischen der zugfahrzeugseitigen Buchse (11A) und dem Pluskontakt des elektrischen Zusatzbremssystems (5) gemessene Gesamtlänge des Dauerpluspfads (25) nicht mehr als 1,5 m beträgt.

## Claims

1. A power supply device for an overrun-braked trailer vehicle which is provided with an electrical auxiliary braking system (5), for example a rolling stop system, as well as further electrical consumer devices, with a supply cable (7) leading from a multi-pole plug (10A) to an electrical distributor (9) in the trailer vehicle, wherein the multi-pole plug (10A) is designed to correspond to a multi-pole socket (11A) fastened to the towing vehicle, **characterized by** a line strand (8) which electrically connects the plug (10A) towards the trailer to the socket (11A) towards the towing vehicle and the steady plus path (25) of which is led in a by-pass (26) by way of the plus contact of the electrical auxiliary braking system (5).

2. A power supply device according to Claim 1, **characterized in that** the line strand (8) is designed at least towards the towing vehicle in the form of a flexible cable strand which terminates in a second plug (10B) which is capable of being inserted into the socket (11A) towards the towing vehicle.

3. A power supply device according to Claim 1 or 2, **characterized in that** the line strand (8) towards the trailer terminates in a plug connector casing (14) into which the plug (10A) towards the trailer is capable of being inserted.

4. A power supply device according to Claim 3, **characterized in that** the beginning and end of the by-pass (26) are situated inside this plug connector casing (14).

5. A power supply device according to Claim 3 or 4, **characterized in that** the plug connector casing (14) is integrated structurally in an appliance casing (21) of the electrical auxiliary braking system (5).

6. A power supply device according to any one of the preceding Claims, **characterized in that** the earth path (28) of the line strand (8) is tapped parallel to the steady plus path (25).

7. A power supply device according to any one of the preceding Claims, **characterized in that** the overall length of the steady plus path (25) measured between the socket (11A) towards the towing vehicle and the plus contact of the electrical auxiliary braking system (5) does not amount to more than 1·5 m.

## Revendications

1. Dispositif d'alimentation électrique pour un véhicule à remorque freinée par inertie, muni d'un système de freinage électrique supplémentaire (5), par exemple un système antiroulis, ainsi que d'autres consommateurs électriques, avec un câble d'alimentation (7) conduisant d'un connecteur multipolaire (10A) vers un répartiteur électrique (9) dans le véhicule à remorque, le connecteur multipolaire (10A) étant conçu de manière correspondante à une prise multipolaire (11A) fixée au véhicule tracteur,
**caractérisé par**
un faisceau conducteur (8) reliant électriquement le connecteur (10A) de la remorque avec la prise (11A) du véhicule tracteur, dont le chemin du plus permanent (25) est guidé dans le bypass (26) par l'intermédiaire du contact plus du système de freinage électrique supplémentaire (5).

2. Dispositif d'alimentation électrique selon la revendication 1, **caractérisé en ce que** le faisceau conducteur (8) est conçu, au moins en direction du véhicule tracteur, comme un faisceau de câbles flexible, qui débouche dans un deuxième connecteur (10B) enfichable dans la prise (11A) du véhicule tracteur.

3. Dispositif d'alimentation électrique selon la revendication 1 ou 2, **caractérisé en ce que** le faisceau conducteur (8) débouche, en direction de la remorque, dans un boîtier de connexion (14) dans lequel le connecteur (10A) peut être enfiché.

4. Dispositif d'alimentation électrique selon la revendication 3, **caractérisé en ce que** le début et la fin du bypass (26) se trouvent à l'intérieur du boîtier de connexion (14).

5. Dispositif d'alimentation électrique selon la revendication 3 ou 4, **caractérisé en ce que** le boîtier de connexion (14) est intégré dans un boîtier d'appareil (21) du système de freinage électrique supplémentaire (5).

6. Dispositif d'alimentation électrique selon l'une des revendications précédentes, **caractérisé en ce que** le chemin de masse (28) du faisceau conducteur (8) est détecté parallèlement au chemin positif permanent (25).

7. Dispositif d'alimentation électrique selon l'une des revendications précédentes, **caractérisé en ce que** la longueur totale du chemin positif permanent (25), mesurée entre la prise (11A) du véhicule tracteur et le contact plus du système de freinage supplémentaire (5), n'est pas supérieure à 1,5 m.
